(19) **Europäisches Patentamt / European Patent Office / Office européen des brevets**

(11) **EP 3 681 156 B1**

(12) **EUROPEAN PATENT SPECIFICATION**

(45) Date of publication and mention
of the grant of the patent:
**14.07.2021 Bulletin 2021/28**

(51) Int Cl.:
***H04N 13/00*** (2018.01)

(21) Application number: **17924248.2**

(86) International application number:
**PCT/CN2017/100701**

(22) Date of filing: **06.09.2017**

(87) International publication number:
**WO 2019/047059 (14.03.2019 Gazette 2019/11)**

(54) **METHOD AND DEVICE FOR TRANSMITTING WIRELESS DATA**

VERFAHREN UND VORRICHTUNG ZUR ÜBERTRAGUNG VON DRAHTLOSEN DATEN

PROCÉDÉ ET DISPOSITIF DE TRANSMISSION DE DONNÉES SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **SZ DJI Technology Co., Ltd.
Shenzhen, Guangdong 518057 (CN)**

(72) Inventor: **ZHU, Lei
Shenzhen
Guangdong 518057 (CN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2017/128314    CN-A- 101 252 686
CN-A- 101 895 776    CN-A- 102 204 257
CN-A- 107 078 852    US-A1- 2005 169 312
US-A1- 2008 043 644    US-A1- 2008 130 737
US-A1- 2013 212 632    US-A1- 2016 198 166
US-B1- 8 897 322**

- **TAMER SHANABLEH ET AL: "Heterogeneous Video Transcoding to Lower Spatio-Temporal Resolutions and Different Encoding Formats", IEEE TRANSACTIONS ON MULTIMEDIA, IEEE SERVICE CENTER, PISCATAWAY, NJ, US, vol. 2, no. 2, 1 June 2000 (2000-06-01), XP011036214, ISSN: 1520-9210**
- **Shan Liu ET AL: "Non-linear Motion-compensated Interpolation for Low Bit Rate Video", , 1 January 2000 (2000-01-01), XP55699071, Retrieved from the Internet: URL:http://citeseerx.ist.psu.edu/viewdoc/d ownload?doi=10.1.1.22.7582&rep=rep1&type=p df [retrieved on 2020-05-27]**
- **JINFENG ZHANG ET AL: "Rate-Distortion Optimized Frame Dropping Based on Dynamic Frame Concealment", EMBEDDED COMPUTING, 2008. SEC '08. FIFTH IEEE INTERNATIONAL SYMPOSIUM ON, IEEE, PISCATAWAY, NJ, USA, 6 October 2008 (2008-10-06), pages 129-134, XP031366798, ISBN: 978-0-7695-3348-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE TECHNOLOGY

This present disclosure relates to the field of wireless communication technologies, and more specifically, to a method and a device for transmitting wireless data.

BACKGROUND

Currently, when a wireless channel or channel bandwidth changes in real time, how to transmit video stably has become a hot topic in research and applications. There are certain problems for video transmission with such channel characteristics. First, a source may change in real time, and a channel may also change in real time. Specifically, there are many factors affecting the wireless channel, such as a distance, a relative position, and obstacles/occlusion between a transmitting terminal and a receiving terminal, immediate electromagnetic environmental interference, and so on. In addition, the changes in the source and the channel are independent of one another and are difficult to predict, which cause difficulties in adapting source encoding to the channel bandwidth in real time.

Low-latency image transmission (especially for unmanned aerial vehicle applications) requires stabilizing transmission time per frame within a certain range to avoid large fluctuations. In general, decoding display can frequently stop at the receiving terminal. For example,

(1) When the channel is stable, if a camera moves abruptly, or an object in a camera view has a large motion, it may cause a sudden change in encoded bitstream size. For example, if the bitstream size is doubled, the transmission latency is doubled accordingly.

(2) When the source is stable, the bitstream size remains constant at this moment. If the channel changes abruptly, it can still cause the transmission latency and jitter. For example, if the channel bandwidth is reduced by one half, the transmission latency is doubled accordingly.

Currently, video encoding standards such as H.263, H.264, H.265, and Motion Picture Expert Group 4 (MPEG-4) have been widely used. In addition, rate control algorithms stabilize an average bit rate over a given time period (several frames) at a given target bit rate to ensure that an overall average latency and jitter range for several frames or frames over a period of time is relatively small.

However, conventional technologies are only intended to control the overall average latency of a group of frames. The conventional technologies cannot resolve the latency and jitter on a per-frame level caused by a dynamic source channel mismatch.

CN 107078852 A discloses a method including obtaining multi-channel coded data, where the multi-channel coded data is coded at multiple code rates for the same data, according to the current channel bandwidth of the channel, selecting the coded data from the multiple channels of coded data transmit encoded data, where the encoded data to be transmitted is a channel of encoded data matching the channel bandwidth. It discloses a method for processing video data, comprising: processing an image sequence to form a plurality of subsequences; encoding the plurality of subsequences separately to form a plurality of encoded subsequences; and selecting frames for transmission according to a size of each frame in the plurality of encoded subsequences and a channel bandwidth.

US 8, 897, 322 B1 discloses a method, system, and medium are provided for deliveringbroadcast Video content at varying levels of Video quality. A source Video stream is provided that is divided into two or more Video substreams such that the Video sub-streams include offset frames from the source Video stream.

SUMMARY

In order to solve at least some of the above problems, in the present disclosure, an original image/video sequence is divided in a time-division manner, and code transmission and independent fault tolerance are separately performed on each of the divided subsequences.

In the present disclosure, image frames in each subsequence that is divided in the time-division manner are combined and selected for transmission according to each subsequence bitstream size and channel conditions in real time. A receiving terminal may perform decoding reconstruction according to the received correct bitstream. The image containing unreceived or error frames is subjected linear interpolation using correctly received frames, thereby obtaining a final complete reconstruction images.

The object of the invention is achieved by claims 1, 5 and 9. Advantageous features are disclosed in the dependent claims.

According to one aspect of the present disclosure, a method for processing video data is provided. The method includes down-sampling temporally an image sequence to form a plurality of subsequences; encoding the plurality of subsequences separately to form a plurality of encoded subsequences; and selecting frames for transmission according to a size of each frame in the plurality of encoded subsequences and a channel bandwidth.

In one embodiment, an earliest frame is found from each of the encoded subsequences, and the frames are combined to form a group. The operation is repeated successively to form a plurality of groups. Then, the frames for transmission in each group are selected according to the size of each frame in each group and the channel bandwidth.

In one embodiment, the frames for transmission in the group can be selected according to the following condition:

$$S \leq T$$

where S represents a total bitstream size of the selected frames in the group, and T represents the channel bandwidth.

In another embodiment, the frames for transmission in the group can be selected according to the following condition:

$$T-D \leq S \leq T+D$$

where S represents the total bitstream size of the selected frames in the group; T represents the channel bandwidth; and D represents a tolerance threshold.

Preferably, as many frames as possible in each group are selected for transmission.

According to another aspect of the present disclosure, an unmanned aerial vehicle is provided, including an imaging device, a processor, and a transmission unit. The imaging device is configured to capture an image sequence. The processor is configured to down-sample temporally the image sequence to form a plurality of subsequences. The processor is further configured to encode the plurality of subsequences separately to form a plurality of encoded subsequences. The processor is further configured to select frames for transmission according to a size of each frame in the plurality of encoded subsequences and a channel bandwidth. The transmission unit is configured to transmit the selected frames.

According to another aspect of the present disclosure, a computer-readable storage medium storing a computer program is provided. When the computer program is executed by at least one processor, the computer program causes the at least one processor to perform the following operations: down-sampling temporally an image sequence to form a plurality of subsequences; encoding the plurality of subsequences separately to form a plurality of encoded subsequences; and selecting frames for transmission according to a size of each frame in the plurality of encoded subsequences and a channel bandwidth.

With the technical solutions of the present disclosure, latency and jitter on a per-frame level (i.e., instability of transmission time) caused by a real-time source channel mismatch can be reduced.

BRIEF DESCRIPTION OF THE DRAWINGS

The above and other features of the present disclosure will become more apparent with the following detailed description in conjunction with the accompanying drawings.

FIG. 1 is a flowchart of a method according to an embodiment of the present disclosure;

FIG. 2 is a schematic diagram of temporal down-sampling of an image sequence according to an embodiment of the present disclosure;

FIG. 3 is a block diagram of an unmanned aerial vehicle according to an embodiment of the present disclosure; and

FIG. 4 is a block diagram of a computer-readable storage medium according to an embodiment of the present disclosure.

DESCRIPTION OF EMBODIMENTS

The following describes the present disclosure in detail with reference to the accompanying drawings and specific embodiments. It should be noted that the present disclosure should not be limited to the specific embodiments described below. In addition, for simplicity, detailed description of the known art not directly related to the present disclosure is omitted to prevent confusion in understanding the present disclosure.

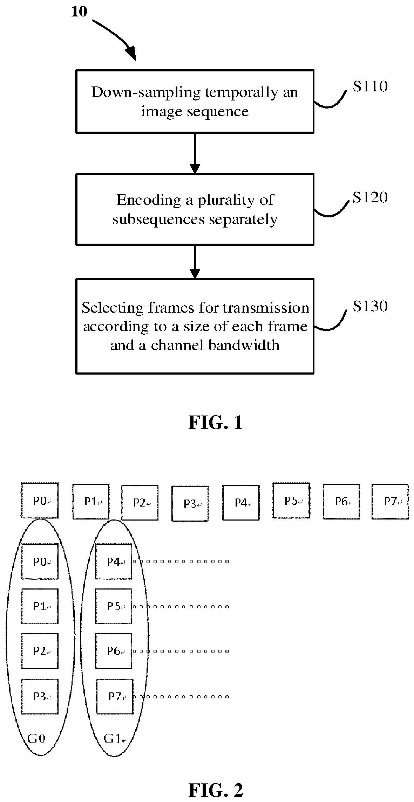

FIG. 1 is a flowchart of a method 10 according to an embodiment of the present disclosure.

As shown in FIG. 1, in Step S110, an image sequence including a plurality of frames is down-sampled temporally to form a plurality of subsequences.

FIG. 2 is a schematic diagram of temporal down-sampling of an image sequence according to an embodiment of the present disclosure. In an example shown in FIG. 2, an original image sequence (P0, P1, ... P7, ...) is divided into 4 subsequences, where a first subsequence contains frames P0, P4, P8, ...; a second subsequence contains frames P1, P5, P9, ...; a third subsequence contains frames P2, P6, P10, ...; and a fourth subsequence contains frames P3, P7, P11.... Therefore, four sub-video sequences with 1/4 of a time resolution of the original video sequence are obtained.

It should be noted that the four subsequences shown in FIG. 2 are only one specific example. The present disclosure is not limited to divide the original image sequence into four subsequences. However, the original image sequence may be divided into a greater or lesser number of subsequences according to actual needs. For example, an original image sequence (P0, P1, ...) may be divided into 6 subsequences, where a first subsequence contains frames P0, P6, P12, ...; a second subsequence contains frames P1, P7, P13, ...; a third subsequence contains frames P2, P8, P14, ...; a fourth subsequence contains frames P3, P9, P15, ...; a fifth subsequence contains frames P4, P10, P16, ...; and a sixth subsequence contains frames P5, P11, P17, .... Therefore, six sub-video sequences with 1/6 of the time resolution of the original video sequence are obtained. Similarly, the original image sequence (P0, P1, ...) may also be divided into two subsequences, where a first subsequence contains frames P0, P2, P4, ..., and a second subsequence contains frames P1, P3, P5....

Returning to FIG. 1, in Step S120, the plurality of subsequences obtained in Step S110 are separately encoded (i.e., compression) to form a plurality of encoded subsequences (encoded bitstreams). For example, each subsequence may be encoded by using a corresponding encoder. The outputs of the plurality of encoders that are used are aggregated to form an encoded bitstream. The encoded bitstream contains various encoded frames.

Next, in Step S130, the encoded frames for transmission are selected according to a size of each frame (encoded frame) in the plurality of encoded subsequences and a channel bandwidth.

According to one embodiment, when the frames for transmission are selected, it is considered to transmit the frames in units of groups (i.e., G0, G1, ... shown in FIG. 2). Taking FIG. 2 as an example again, according to the size of the current frame bitstream of each subsequence in each group (G0, G1, ...) and a real-time channel estimation value, the current frame bitstream of the four subsequences in the group may be combined and transmitted to achieve real-time matching with a wireless channel.

In the following, how to select the frames for transmission according to the frame size and the channel bandwidth is described in detail by a specific example.

It is assumed that bitstream sizes of the four encoded frames P0, P1, P2, and P3 in a group G0 are S0, S1, S2, and S3, respectively. In addition, it is assumed that the estimation value of the current channel bandwidth (i.e., an amount of transmittable data in the group G0 at the current time) is T. The value of T may be predefined (e.g., the value of T may be obtained based on historical values), or the value of T may be calculated using a channel bandwidth estimator. Further, it is assumed that transmission and reception states of the current four subsequences are error-free. Then,

(1) If S0+S1+S2+S3<=T, or a scenario has no requirement for latency, the bitstream containing the four encoded frames P0, P1, P2, and P3 may be completely transmitted.

(2) Otherwise, the bitstream size may be selected from S0, S1, S2, and S3 so that a total size of the combined bitstream is closest to T. Preferably, the bitstream containing as many encoded frames as possible is selected on the premise that the total size of the combined bitstream is kept closest to T. For example, in this scenario, if S0+SKS0+S2<T is satisfied, a bitstream containing the encoded frames P0 and P2 is selected and sent. Alternatively, if S0+S1<T and S0+S2+S3<T are satisfied, and a size of S0+S1 is equivalent to or nearly equivalent to a size of S0+S2+S3, then a bitstream containing the encoded frames P0, P2, and P3 is preferably selected and sent.

(3) For application scenarios that have strict latency requirements, a combined data size should be less than T. However, for application scenarios that have a certain tolerance for latency and jitter, the encoded frames for transmission are selected on the condition that the data size of the combined bitstream satisfies $T-D \leq S \leq T+D$, where D is a tolerance threshold, and S is a total size of the selected encoded frames. Preferably, the bitstream containing as many encoded frames as possible is selected on the premise that the condition is satisfied.

At a receiving terminal, the bitstream of each subsequence in the group may also be received in units of groups. For example, when one or more of the frames P0, P1, P2, P3 in the group G0 are correctly received, an original image from a given location at a specified time may be recovered by using the correctly received subsequence image, which is not applicable to subsequences with errors. Conversely, for the subsequences with errors, the original image corresponding to the given location at the specified time can be recovered by linear-weighted interpolation using the correctly received reconstruction sequence, thereby producing a final reconstruction image sequence.

According to the embodiment, even if errors occurred in any data block in a certain transmitted frame image, the transmitted frame image may be subjected time-dimensional linear interpolation using other correctly received frame images, thereby obtaining a reconstruction image from the given location at the specified time. Thus, the latency and jitter on a frame level caused by a real-time source channel mismatch can be reduced, improving the fault tolerance.

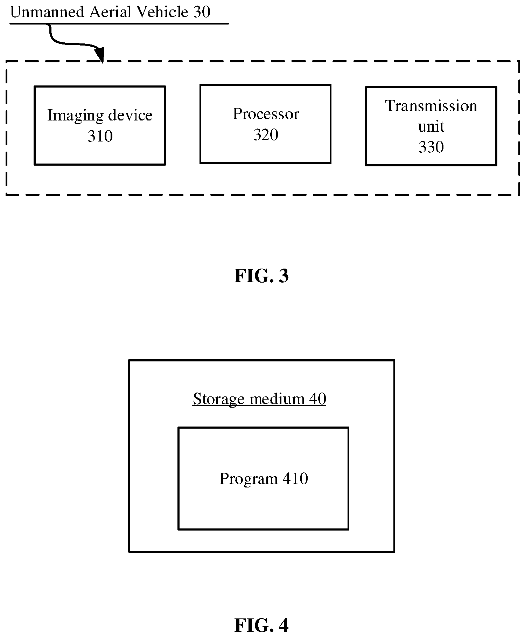

The technical solution of the present disclosure may be applied to an unmanned aerial vehicle. FIG. 3 is a block diagram of an unmanned aerial vehicle 30 according to an embodiment of the present disclosure. As shown in FIG. 3, the unmanned aerial vehicle 30 includes an imaging device 310, a processor 320, and a transmission unit 330.

The imaging device 310 may be configured to capture an image sequence containing a plurality of frames. For example, the imaging device 310 may include one or more cameras distributed on the unmanned aerial vehicle.

The processor 320 may be configured to perform operations on the image sequence containing a plurality of frames captured by the imaging device 310. Specifically, the processor 320 down-samples temporally the captured image sequence containing a plurality of frames to form a plurality of subsequences. The processor 320 also encodes the plurality of formed subsequences separately to form a plurality of encoded subsequences. In addition, the processor 320 also selects encoded frames for transmission according to a size of each encoded frame in the plurality of encoded subsequences and an estimation value of a current channel bandwidth.

The processor 320 finds an earliest frame from each of the encoded subsequences. These encoded frames are combined to form a group. The processor 320 repeats successively the operation to form a plurality of groups. In addition, the processor 320 selects the encoded frames for transmission in each group according to the size of each encoded frame in each group and the estimation value of the current channel bandwidth.

For example, the processor 320 may select the encoded frames for transmission in the group according to the following condition:

$$S \leq T$$

where S represents a total bitstream size of the selected encoded frames in the group, and T represents the channel bandwidth. Preferably, the processor 320 selects as many encoded frames as possible in each group for transmission.

Alternatively, the processor 320 may select the encoded frames for transmission in the group according to the following condition:

$$T\text{-}D \leq S \leq T\text{+}D$$

where S represents a total bitstream size of the selected encoded frames in the group; T represents the channel bandwidth; and D represents a tolerance threshold. Preferably, the processor 320 selects as many encoded frames as possible in each group for transmission.

The transmission unit 330 may be configured to transmit frames selected by the processor 320. For example, the transmission unit 330 may include a wireless communication module that uses a variety of wireless communication technologies (e.g., cellular communication, Bluetooth, Wi-Fi, etc.).

In one embodiment of the present disclosure, when the unmanned aerial vehicle performs an image transmission task, the latency and jitter on a frame level caused by a real-time source channel mismatch can be reduced, thereby improving the fault tolerance.

In addition, the embodiments of the present disclosure may be implemented by means of a computer program product. For example, the computer program product may be a computer-readable storage medium. A computer program is stored on the computer-readable storage medium. When the computer program is executed on a computing device, related operations can be performed to implement the above-described technical solutions of the present disclosure.

For example, FIG. 4 is a block diagram of a computer-readable storage medium 40 according to an embodiment of the present disclosure. As shown in FIG. 4, the computer-readable storage medium 40 includes a program 410. When the program 410 is executed by at least one processor, the at least one processor may perform following operations: down-sampling temporally an image sequence to form a plurality of subsequences; encoding the plurality of subsequences separately to form a plurality of encoded subsequences; and selecting encoded frames for transmission according to a size of each frame in the plurality of encoded subsequences and an estimation value of a current channel bandwidth.

Alternatively, when the program 410 is executed by the at least one processor, the at least one processor may perform the following operations: finding an earliest frame from each of the encoded subsequences, and combining the encoded frames to form a group; repeating successively the operation to form a plurality of groups; and selecting the encoded frames for transmission in each group according to the size of each encoded frame in each group and the estimation value of the current channel bandwidth.

It should be understood by those skilled in the art that examples of the computer-readable storage medium 40 in the embodiments of the present disclosure include, but are not limited to: a semiconductor storage medium, an optical storage medium, a magnetic storage medium, or any other computer-readable storage medium.

The methods and related devices according to the present disclosure have been described above in conjunction with preferred embodiments. It should be understood by those skilled in the art that the methods shown above are only exemplary. The method according to the present disclosure is not limited to steps or sequences shown above.

It should be understood that the above embodiments of the present disclosure may be implemented through software, hardware, or a combination of software and hardware. Such an arrangement of the present disclosure is typically provided as software, code, and/or other data structures that are configured or encoded on a computer-readable medium, such as an optical medium (for example, a CD-ROM), a floppy disk, or a hard disk, or other media such as firmware or microcode on one or more read-only memory (ROM) or random access memory RAM) or programmable read-only memory (PROM) chips, or downloadable software images, shared database and so on in one or more modules. Software or firmware or such configuration may be installed on a computing equipment such that one or more processors in the computing equipment perform the technical solutions described in the embodiments of the present disclosure.

In addition, each functional module or each feature of the base station device and the terminal device used in each of the above embodiments may be implemented or executed by a circuit, which is usually one or more integrated circuits. Circuits designed to execute various functions described in this description may include general purpose processors, digital signal processors (DSPs), application specific integrated circuits (ASICs) or general purpose integrated circuits, field programmable gate arrays (FPGAs) or other programmable logic devices, discrete gates or transistor logic, or discrete hardware components, or any combination of the above. The general purpose processor may be a microprocessor: or the processor may be an existing processor, a controller, a microcontroller, or a state machine. The above-mentioned general-purpose processor or each circuit may be configured with a digital circuit or may be configured with a logic circuit. In addition, when an advanced technology that can replace current integrated circuits emerges because of advances in semiconductor technology, the present disclosure may also use integrated circuits obtained using this advanced technology.

The program running on the device according to the present disclosure may be a program that causes the computer to implement the functions of the embodiments of the present disclosure by controlling a central processing unit (CPU). The program or information processed by the program can be stored temporarily in volatile memory (e.g., random access memory RAM), hard disk drive (HDD), non-volatile memory (e.g., flash memory), or other memory systems. The program for implementing the functions of the embodiments of the present disclosure may be recorded on a computer-readable recording medium. The corresponding functions can be achieved by reading programs recorded on the recording medium and executing them by the computer system. The so-called "computer system" may be a computer system embedded in the device, which may include operating systems or hardware (e.g., peripherals).

The embodiments of the present disclosure have been described in detail above with reference to the accompanying drawings. However, the specific structures are not limited to the above embodiments, and the present disclosure also includes any design modifications that do not depart from the main idea of the present disclosure. In addition, various modifications can be made to the present disclosure within the scope of the claims, and embodiments resulting from the appropriate combination of the technical means disclosed in different embodiments are also included within the technical scope of the present disclosure. In addition, components with the same effect described in the above embodiments may be replaced with one another.

**Claims**

1. A method for processing video data, comprising:

   down-sampling (S110) temporally an image sequence to form a plurality of subsequences;
   encoding (S120) the plurality of subsequences separately to form a plurality of encoded subsequences;and
   selecting (S130) frames for transmission according to a size of each frame in the plurality of encoded subsequences and a channel bandwidth,
   wherein selecting the frames for transmission comprises:

   finding an earliest frame from each of the plurality of encoded subsequences, and combining the frames to form a group; repeating the operation successively to form a plurality of groups; and selecting frames for transmission in each group according to a size of each frame in each group and the channel bandwidth.

2. The method according to claim 1, wherein selecting the frames for transmission in each group is according to a following condition:

$$S \leqslant T$$

wherein S represents a total bitstream size of the selected frames in the group, and T represents the channel bandwidth.

3. The method according to claim 1, wherein selecting the frames for transmission in each group is according to a following condition:

$$T\text{-}D \leqslant S \leqslant T\text{+}D$$

wherein S represents a total bitstream size of the selected frames in the group; T represents the channel bandwidth; and D represents a tolerance threshold.

4. The method according to claim 2 or 3, further including:
   selecting as many frames as possible in each group for transmission.

5. An unmanned aerial vehicle, comprising:

   an imaging device (310), configured to capture an image sequence;
   a processor (320) configured to:

      down-sample temporally the image sequence to form a plurality of subsequences;
      encode the plurality of subsequences separately to form a plurality of encoded subsequences; and
      select frames for transmission according to a size of each frame in the plurality of encoded subsequences and a channel bandwidth; and

   a transmission unit (330) configured to transmit the selected frames,
   wherein the processor (320) is further configured to:

find an earliest frame from each of the plurality of encoded subsequences, and combine the frames to form a group;
repeat the operation successively to form a plurality of groups; and
select frames for transmission in each group according to a size of each frame in each group and the channel bandwidth.

6. The unmanned aerial vehicle according to claim 5, wherein:
the processor (320) is configured to select the frames for transmission in each group is according to a following condition:

$$S \leqslant T$$

wherein S represents a total bitstream size of the selected frames in the group, and T represents the channel bandwidth.

7. The unmanned aerial vehicle according to claim 5, wherein:
the processor (320) is configured to select the frames for transmission in each group is according to a following condition:

$$T\text{-}D \leqslant S \leqslant T\text{+}D$$

wherein S represents the total bitstream size of the selected frames in the group; T represents the channel bandwidth; and D represents a tolerance threshold.

8. The unmanned aerial vehicle according to claim 6 or 7, wherein the processor (320) is configured to:
select as many frames as possible in each group for transmission.

9. A computer-readable storage medium, storing a computer program, and, when the computer program is executed by at least one processor (320), causing the at least one processor (320) to perform following operations:

down-sampling temporally an image sequence to form a plurality of subsequences;
encoding the plurality of subsequences separately to form a plurality of encoded subsequences; and
selecting frames for transmission according to a size of each frame in the plurality of encoded subsequences and a channel bandwidth,
wherein the computer program causes the at least one processor (320) to select the frames for transmission by following operations:

finding an earliest frame from each of the plurality of encoded subsequences, and combining the frames to form a group;
repeating the operation successively to form a plurality of groups; and
selecting frames for transmission in each group according to the size of each frame in each group and the channel bandwidth.

10. The computer-readable storage medium according to claim 9, wherein the computer program causes the at least one processor (320) to select the frames for transmission in each group according to a following condition:

$$S \leqslant T$$

wherein S represents a total bitstream size of the selected frames in the group, and T represents the channel bandwidth.

11. The computer-readable storage medium according to claim 9, wherein the computer program causes the at least one processor (320) to select the frames for transmission in each group according to a following condition:

$$T\text{-}D \leqslant S \leqslant T\text{+}D$$

wherein S represents a total bitstream size of the selected frames in the group; T represents the channel bandwidth; and D represents a tolerance threshold.

12. The computer-readable storage medium according to claim 10 or 11, wherein:
the computer program causes the at least one processor (320) to select as many frames as possible in each group for transmission.

**Patentansprüche**

1. Verfahren zum Verarbeiten von Videodaten, das Folgendes umfasst:

zeitliches Downsampeln (S110) einer Bildsequenz, um eine Vielzahl von Untersequenzen zu bilden;
separates Codieren (S120) der Vielzahl von Untersequenzen, um eine Vielzahl von codierten Untersequenzen zu bilden; und
Auswählen (S130) von Frames zur Übertragung gemäß einer Größe jedes Frames in der Vielzahl von codierten Untersequenzen und einer Kanalbandbreite,

wobei das Auswählen der Frames zur Übertragung Folgendes umfasst:

Suchen nach einem frühesten Frame in jeder der Vielzahl von codierten Untersequenzen und Kombinieren der Frames, um eine Gruppe zu bilden;
aufeinanderfolgendes Wiederholen der Operation, um eine Vielzahl von Gruppen zu bilden; und
Auswählen von Frames zur Übertragung in jeder Gruppe gemäß einer Größe jedes Frames in jeder Gruppe und der Kanalbandbreite.

2. Verfahren nach Anspruch 1, wobei das Auswählen der Frames zur Übertragung in jeder Gruppe gemäß einer folgenden Bedingung erfolgt:

$$S \leq T$$

wobei S eine gesamte Bitstromgröße der ausgewählten Frames in der Gruppe repräsentiert und T die Kanalbandbreite repräsentiert.

3. Verfahren nach Anspruch 1, wobei das Auswählen der Frames zur Übertragung in jeder Gruppe gemäß einer folgenden Bedingung erfolgt:

$$T - D \leq S \leq T + D$$

wobei S eine gesamte Bitstromgröße der ausgewählten Frames in der Gruppe repräsentiert; T die Kanalbandbreite repräsentiert und D einen Toleranzschwellwert repräsentiert.

4. Verfahren nach Anspruch 2 oder 3, das ferner Folgendes beinhaltet:
Auswählen von so vielen Frames wie möglich in jeder Gruppe zur Übertragung.

5. Unbemanntes Luftfahrzeug, das Folgendes umfasst:

eine Bildgebungsvorrichtung (310), die dazu ausgelegt ist, eine Bildsequenz zu erfassen;
einen Prozessor (320), der zu Folgendem ausgelegt ist:

zeitliches Downsampeln der Bildsequenz, um eine Vielzahl von Untersequenzen zu bilden;
separates Codieren der Vielzahl von Untersequenzen, um eine Vielzahl von codierten Untersequenzen zu bilden; und
Auswählen von Frames zur Übertragung gemäß einer Größe jedes Frames in der Vielzahl von codierten Untersequenzen und einer Kanalbandbreite; und

eine Übertragungseinheit (330), die dazu ausgelegt ist, die ausgewählten Frames zu übertragen,
wobei der Prozessor (320) ferner zu Folgendem ausgelegt ist:

Suchen nach einem frühesten Frame in jeder der Vielzahl von codierten Untersequenzen und Kombinieren der Frames, um eine Gruppe zu bilden;
aufeinanderfolgendes Wiederholen der Operation, um eine Vielzahl von Gruppen zu bilden; und
Auswählen von Frames zur Übertragung in jeder Gruppe gemäß einer Größe jedes Frames in jeder Gruppe und der Kanalbandbreite.

6. Unbemanntes Luftfahrzeug nach Anspruch 5, wobei:
der Prozessor (320) dazu ausgelegt ist, die Frames zur Übertragung in jeder Gruppe gemäß einer folgenden Bedingung auszuwählen:

$$S \leq T$$

wobei S eine gesamte Bitstromgröße der ausgewählten Frames in der Gruppe repräsentiert und T die Kanalbandbreite repräsentiert.

7. Unbemanntes Luftfahrzeug nach Anspruch 5, wobei:
der Prozessor (320) dazu ausgelegt ist, die Frames zur Übertragung in jeder Gruppe ist gemäß einer folgenden Bedingung auszuwählen:

$$T - D \leq S \leq T + D$$

wobei S die gesamte Bitstromgröße der ausgewählten Frames in der Gruppe repräsentiert; T die Kanalbandbreite repräsentiert und D einen Toleranzschwellwert repräsentiert.

8. Unbemanntes Luftfahrzeug nach Anspruch 6 oder 7, wobei der Prozessor (320) zu Folgendem ausgelegt ist:
Auswählen von so vielen Frames wie möglich in jeder Gruppe zur Übertragung.

**9.** Computerlesbares Speichermedium, auf dem ein Computerprogramm gespeichert ist und das, wenn das Computerprogramm von mindestens einem Prozessor (320) ausgeführt wird, den mindestens einen Prozessor (320) veranlasst, die folgenden Operationen durchzuführen:

zeitliches Downsampeln einer Bildsequenz, um eine Vielzahl von Untersequenzen zu bilden;
separates Codieren der Vielzahl von Untersequenzen, um eine Vielzahl von codierten Untersequenzen zu bilden; und
Auswählen von Frames zur Übertragung gemäß einer Größe jedes Frames in der Vielzahl von codierten Untersequenzen und einer Kanalbandbreite,
wobei das Computerprogramm den mindestens einen Prozessor (320) veranlasst, die Frames zur Übertragung durch die folgenden Operationen auszuwählen:

Suchen nach einem frühesten Frame in jeder der Vielzahl von codierten Untersequenzen und Kombinieren der Frames, um eine Gruppe zu bilden;
aufeinanderfolgendes Wiederholen der Operation, um eine Vielzahl von Gruppen zu bilden; und
Auswählen von Frames zur Übertragung in jeder Gruppe gemäß der Größe jedes Frames in jeder Gruppe und der Kanalbandbreite.

**10.** Computerlesbares Speichermedium nach Anspruch 9, wobei das Computerprogramm den mindestens einen Prozessor (320) veranlasst, die Frames zur Übertragung in jeder Gruppe gemäß einer folgenden Bedingung auszuwählen:

$$S \leq T$$

wobei S eine gesamte Bitstromgröße der ausgewählten Frames in der Gruppe repräsentiert und T die Kanalbandbreite repräsentiert.

**11.** Computerlesbares Speichermedium nach Anspruch 9, wobei das Computerprogramm den mindestens einen Prozessor (320) veranlasst, die Frames zur Übertragung in jeder Gruppe gemäß einer folgenden Bedingung auszuwählen:

$$T - D \leq S \leq T + D$$

wobei S eine gesamte Bitstromgröße der ausgewählten Frames in der Gruppe repräsentiert; T die Kanalbandbreite repräsentiert und D einen Toleranzschwellwert repräsentiert.

**12.** Computerlesbares Speichermedium nach Anspruch 10 oder 11, wobei:
das Computerprogramm den mindestens einen Prozessor (320) veranlasst, in jeder Gruppe so viele Frames wie möglich zur Übertragung auszuwählen.

## Revendications

**1.** Procédé de traitement de données vidéo, comprenant les étapes ci-dessous consistant à :

sous-échantillonner (S110) temporellement une séquence d'images en vue de former une pluralité de sous-séquences ;
coder (S120) la pluralité de sous-séquences séparément en vue de former une pluralité de sous-séquences codées ; et
sélectionner (S130) des trames, à des fins de transmission, selon une taille de chaque trame dans la pluralité de sous-séquences codées et une largeur de bande de canal ;
dans lequel l'étape de sélection des trames à des fins de transmission comprend les étapes ci-dessous consistant à :

trouver une trame la plus ancienne à partir de chacune de la pluralité de sous-séquences codées, et combiner les trames en vue de former un groupe ;
répéter l'opération successivement en vue de former une pluralité de groupes ; et
sélectionner des trames à des fins de transmission dans chaque groupe selon une taille de chaque trame dans chaque groupe et la largeur de bande de canal.

**2.** Procédé selon la revendication 1, dans lequel l'étape de sélection des trames à des fins de transmission dans chaque groupe est selon une condition donnée ci-dessous :

$$S \leq T$$

dans laquelle « S » représente une taille de flux binaire totale des trames sélectionnées dans le groupe, et « T » représente la largeur de bande de canal.

**3.** Procédé selon la revendication 1, dans lequel l'étape de sélection des trames à des fins de transmission dans chaque groupe est selon la condition donnée ci-dessous :

$$T - D \leq S \leq T + D$$

dans laquelle « S » représente une taille de flux binaire totale des trames sélectionnées dans le groupe ; « T » représente la largeur de bande de canal ; et « D » représente un seuil de tolérance.

4. Procédé selon la revendication 2 ou 3, incluant en outre l'étape ci-dessous consistant à :
sélectionner autant de trames que possible, dans chaque groupe, à des fins de transmission.

5. Véhicule aérien sans pilote, comprenant :

un dispositif d'imagerie (310), configuré de manière à capturer une séquence d'images ;
un processeur (320) configuré de manière à :

sous-échantillonner temporellement la séquence d'images en vue de former une pluralité de sous-séquences ;
coder la pluralité de sous-séquences séparément en vue de former une pluralité de sous-séquences codées ; et
sélectionner des trames à des fins de transmission selon une taille de chaque trame dans la pluralité de sous-séquences codées et une largeur de bande de canal ; et

une unité de transmission (330) configurée de manière à transmettre les trames sélectionnées ;
dans lequel le processeur (320) est en outre configuré de manière à :

trouver une trame la plus ancienne à partir de chacune de la pluralité de sous-séquences codées, et combiner les trames en vue de former un groupe ;
répéter l'opération successivement en vue de former une pluralité de groupes ; et
sélectionner des trames à des fins de transmission dans chaque groupe selon une taille de chaque trame dans chaque groupe et la largeur de bande de canal.

6. Véhicule aérien sans pilote selon la revendication 5, dans lequel :
le processeur (320) est configuré de manière à sélectionner les trames à des fins de transmission dans chaque groupe selon une condition donnée ci-dessous :

$$S \leq T$$

dans laquelle « S » représente une taille de flux binaire totale des trames sélectionnées dans le groupe, et « T » représente la largeur de bande de canal.

7. Véhicule aérien sans pilote selon la revendication 5, dans lequel :
le processeur (320) est configuré de manière à sélectionner les trames à des fins de transmission dans chaque groupe selon une condition donnée ci-dessous :

$$T-D \leq S \leq T+D$$

dans laquelle « S » représente la taille de flux binaire totale des trames sélectionnées dans le groupe ; « T » représente la largeur de bande de canal ; et « D » représente un seuil de tolérance.

8. Véhicule aérien sans pilote selon la revendication 6 ou 7, dans lequel le processeur (320) est configuré de manière à :
sélectionner autant de trames que possible, dans chaque groupe, à des fins de transmission.

9. Support de stockage lisible par ordinateur, stockant un programme informatique, et, lorsque le programme informatique est exécuté par au moins un processeur (320), amenant ledit au moins un processeur (320) à mettre en œuvre les opérations ci-dessous consistant à :

sous-échantillonner temporellement une séquence d'images en vue de former une pluralité de sous-séquences ;
coder la pluralité de sous-séquences séparément en vue de former une pluralité de sous-séquences codées ; et
sélectionner des trames, à des fins de transmission, selon une taille de chaque trame dans la pluralité de sous-séquences codées et une largeur de bande de canal ;
dans lequel le programme informatique amène ledit au moins un processeur (320) à sélectionner les trames à des fins de transmission en mettant en œuvre les opérations ci-dessous consistant à :

trouver une trame la plus ancienne à partir de chacune de la pluralité de sous-séquences codées, et combiner les trames en vue de former un groupe ;
répéter l'opération successivement en vue de former une pluralité de groupes ; et
sélectionner des trames à des fins de transmission dans chaque groupe selon une taille de chaque trame dans chaque groupe et la largeur de bande de canal.

10. Support de stockage lisible par ordinateur selon la revendication 9, dans lequel le programme informatique amène ledit au moins un processeur (320) à sélectionner les trames à des fins de transmission dans chaque groupe selon une condition donnée ci-dessous :

$$S \leq T$$

dans laquelle « S » représente une taille de flux binaire totale des trames sélectionnées dans le groupe, et « T » représente la largeur de bande de canal.

11. Support de stockage lisible par ordinateur selon la revendication 9, dans lequel le programme informatique amène ledit au moins un processeur (320) à sélectionner les trames à des fins de transmission dans chaque groupe selon une condition donnée ci-dessous :

$$T\text{-}D \leq S \leq T\text{+}D$$

dans laquelle « S » représente une taille de flux binaire totale des trames sélectionnées dans le groupe ; « T » représente la largeur de bande de canal ; et « D » représente un seuil de tolérance.

12. Support de stockage lisible par ordinateur selon la revendication 10 ou 11, dans lequel :
le programme informatique amène ledit au moins un processeur (320) à sélectionner autant de trames que possible, dans chaque groupe, à des fins de transmission.

10

Down-sampling temporally an
image sequence — S110

Encoding a plurality of
subsequences separately — S120

Selecting frames for transmission
according to a size of each frame
and a channel bandwidth — S130

**FIG. 1**

| P0 | P1 | P2 | P3 | P4 | P5 | P6 | P7 |

P0
P1
P2
P3
G0

P4 ○ ○ ○ ○ ○ ○ ○ ○ ○ ○ ○ ○ ○
P5 ○ ○ ○ ○ ○ ○ ○ ○ ○ ○ ○ ○
P6 ○ ○ ○ ○ ○ ○ ○ ○ ○ ○ ○ ○
P7 ○ ○ ○ ○ ○ ○ ○ ○ ○ ○ ○ ○
G1

**FIG. 2**

Unmanned Aerial Vehicle 30

| Imaging device 310 | Processor 320 | Transmission unit 330 |

**FIG. 3**

Storage medium 40

Program 410

**FIG. 4**

**EP 3 681 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107078852 A
- US 8897322 B1